# EUROPEAN PATENT SPECIFICATION

(11) **EP 3 644 017 B1**
(45) Date of publication and mention of the grant of the patent: **03.12.2025**
(21) Application number: 19204961.7
(22) Date of filing: 23.10.2019
(51) Int. Cl.: G01D 4/00, G01D 7/00, G01D 21/00, B64F 1/28

(54) **SYSTEM AND METHODS FOR SMART METERING**
SYSTEM UND VERFAHREN ZUR INTELLIGENTEN ZÄHLEINRICHTUNG
SYSTÈME ET PROCÉDÉS DE COMPTEUR INTELLIGENT

(30) Priority: 23.10.2018 US 201862749295 P
(43) Date of publication of application: 29.04.2020
(73) Proprietor: Advanced Flow Solutions, Inc., Oklahoma City, OK 73131 (US)
(72) Inventor: Clevenger, Dan, Lake Bluff, IL 60044 (US)
(74) Representative: Mathys & Squire

(56) References cited:
- CN-A- 105 096 206
- DE-A1- 102014 016 133
- US-A1- 2015 106 196
- US-A1- 2017 286 936

## Description

### BACKGROUND

Pumps can be used to transfer liquid from a source to a target delivery location, such as transferring fuel from a storage vessel to a target vehicle. Often, when transferring fluids, such as fuels, from a storage vessel to a receiving vehicle or container, a metering apparatus is used to identify the amount of liquid transferred in order to maintain appropriate records. Typical meters measure the amount (e.g., volume, weight, etc.) of liquid passing through a transfer component (e.g., hose, pipe, etc.), and display the measured amount for an operator to record.

DE102014016133 A1 discloses a flow meter for detecting the flow of a fluid in a fluid line with a measuring device, electronics for measured value processing and measured value evaluation, and a display. A binary optical area code is provided.

US2015106196 A1 discloses a fuel dispensing system involving data exchanges with a mobile device of the buyer, transaction data are further sent from the buyer device to a remote cloud.

CN105096206 A discloses an electronic doorplate system based on a two-dimension code and a meter reading method.

### SUMMARY

This Summary is provided to introduce a selection of concepts in a simplified form that are further described below in the Detailed Description. This Summary is not intended to identify key factors or essential features of the claimed subject matter, nor is it intended to be used to limit the scope of the claimed subject matter.
One or more techniques and/or systems are disclosed for providing for improved fluid transfer information (e.g., transactional and/or metering information) collection and management. As an example, a system may utilize scannable codes to collect fluid transfer information, mitigating the use of printable tickets, radio wave or cellular data communication, or manual collection, while improving security. A metering register device can be connected to a fluid flow meter to collect flow, fluidic volume or mass information from the meter, for example, as well as collecting information associated with fluid transfer, such as data input by a user or captured from connected hardware. Upon completion of a fluid transfer event, such as aircraft refueling or other fluid transfer applications, data associated with the transfer event, such as customer, sale number, quantity, product type, conditions, operator, time, price, and product characteristics such as fuel quality, density, additives, inventory levels, system pressures, etc., can be converted into a scannable code, such as a QR code and displayed on a display screen. The scannable code can be captured by a portable device, stored, and later transferred to a back end data management system.

In one implementation of a system for collecting and transferring fluid transfer data can comprise a fluid flow register that receives fluid flow information from a fluid flow meter for a fluid transfer event, and collects data associated with the fluid transfer event. Further, the example system can comprise a scannable code generator that generates a scannable code comprising data indicative of the fluid flow information and the collected data. Additionally, a display screen can be used to display the generated, scannable code. A portable scanning device can be used to scan or capture the scannable code that is displayed on the display screen. The captured code or the data indicative of the fluid flow information and the collected data can be stored, viewed, and analyzed locally. The portable scanning device can transfer the scannable code or the data indicative of the fluid flow information and the collected data to a remote fluid transfer data management system or accounting system.

To the accomplishment of the foregoing and related ends, the following description and annexed drawings set forth certain illustrative aspects and implementations. These are indicative of but a few of the various ways in which one or more aspects may be employed. Other aspects, advantages and novel features of the disclosure will become apparent from the following detailed description when considered in conjunction with the annexed drawings.

### BRIEF DESCRIPTION OF THE DRAWINGS

FIGURE 1 is an illustration of an example implementation of a liquid transfer register apparatus.
FIGURE 2 is a component diagram illustrating one implementation of one or more portions of one or more systems described herein.
FIGURE 3 is a component diagram illustrating one implementation of one or more portions of one or more systems described herein.
FIGURES 4 - 9 illustrate an example implementation of a method for improving fueling operations, utilizing one or more systems described herein.

### DETAILED DESCRIPTION

The claimed subject matter is now described with reference to the drawings, wherein like reference numerals are generally used to refer to like elements throughout. In the following description, for purposes of explanation, numerous specific details are set forth in order to provide a thorough understanding of the claimed subject matter. It may be evident, however, that the claimed subject matter may be practiced without these specific details. In other instances, structures and devices are shown in block diagram form in order to facilitate describing the claimed subject matter.

A system can be devised for metering, recording and managing liquid transfer data, such as fueling of aircraft, for example. As an example, aircraft fueling (e.g., and other vehicle fueling) may be performed in a commercial setting (e.g., not a consumer point of sale), where the amount of fuel transferred is metered, records of fuel transfers are maintained, and invoicing and/or inventories can be managed. At times, for example, the data associated with the vehicle fueling (e.g., amount, type, timing, quality, etc.) may be sensitive to the users, such that it may be desirable to keep the information from third parties while also mitigating translational errors, or manipulation by reporting operator or any third party, whether intentional or otherwise.

In one aspect, a system may be devised that allows for increased data security, while also allowing for improved data collection accuracy, along with improved data storage and management. In one implementation, in this aspect, the liquid transfer data may be transferred from a liquid metering apparatus to a data collection device using an optical scanning operation. As one example, upon completion of liquid transfer, the metering apparatus can generate an optical code that is indicative of the data associated with the liquid transfer event, and display that code on a display screen. Further, in this example, an operator can use a portable device to scan the displayed code, to transfer the code to the handheld device. In this way, for example, the displayed code comprising information indicative of the liquid transfer data can be merely transferred though direct optical scanning.

As one illustrative example, aircraft fueling involves transferring aviation fuel from a storage tank (e.g., mobile or fixed) to the fuel tank(s) of the target aircraft. Typical fuel transfer operations can involve open nozzle refueling, such as over-the-wing refueling, or pressure refueling, such as using a sealed, pressurized fueling line. Either way, for example, the fuel is pumped from the storage vessel to the aircraft tank(s), and is typically metered to determine how much fuel is transferred. Over-the-wing refueling involves placing a fueling nozzle in a fueling opening (e.g., typically on top of the wing), much like typical automobile fueling, and operating the pump to fill the tank(s) through gravity. Pressure refueling involves securing the fueling line to a fueling opening (e.g., typically under the wing), and sealing it in place. The pump is operated and fuel is forced into the tank(s) under pressure. It should be noted that the techniques and systems, described herein, may be utilized with other fluid transfer operations, in other industries, such as liquefied petroleum gas (LPG) in a variety of industries and settings, ground vehicle fueling, fleet vehicle fueling, and others.

Typically, for aircraft refueling, a fuel meter (e.g., flow meter) is disposed in-line between the storage vessel and the aircraft fuel tank. Often, a pumping vehicle (e.g., dispenser unit or other apparatus) is used to transfer fuel from a stationary tank, from an underground hydrant system, or from fuel stored on-board the vehicle. In one example, the refueling vehicle may comprise a pumping unit and a metering unit, amongst other systems. As an example, an aviation fuel measuring device may comprise a positive displacement meter; and other examples may include amplified turbine, electromagnetic, and mass flowmeters. A positive displacement flow meter measures a flow rate of a volume, or volumetric flow rate, of a fluid moving through known, metered volumes. A number of known volumes that pass through a chamber in the meter identifies the fluid volume; and the rate of revolution of gears or reciprocating parts identifies the flow rate. As one example, a meter may comprise a housing in which a plurality (e.g., three) synchronized rotors turn as a result of fluid flow.

In one implementation, the meter may comprise a Weights and Measures-approved (e.g., approved by a governmental or industry agencies for targeted use, accuracy, etc.) mechanical or electronic register, along with ticket printer, and/or control systems, which may be used for truck-mounted or fixed-site meter applications. That is, for example, a site that is without electrical power may utilize a mechanical system that relies on the movement of the fluid through the system to operate the register, and/or control systems. As another example, at a site powered with electricity, an electronic register may be used, along with ticket printing, and/or control systems. As an example, both technologies can provide recording functions for totalizing, inventory control, billing, batching, and ticketing.

In one implementation, a mechanical register may be used in a variety of mobile and fixed-site applications, such as applications without electrical power. In another implementation, an electronic register coupled with the flow meter can provide highly accurate metering over various ranges of flow rates. Further, such a register can provide enhanced functions including: automated data collection (e.g., date, time, product selection, delivery quantity, and more), on-site ticket generation, meter linearization (e.g., error correction), electronic temperature volume compensation, and/or improved security. As an example, security may be of special concern in applications where data concerning the liquid transfer is proprietary and/or of special importance as a valued secret (e.g., government, military, trade secrets, etc.). For example, it may be desirable to keep secret the type and amount (e.g., and other data) of fuel transferred to a military aircraft during refueling.

In one implementation, an electronic flow meter may comprise a microprocessor-based electronic meter register that is configured to the properties of the metered liquid, and interfaces with the electronic components of the meter system (e.g., and external components such as pumps, injectors, and shutdown devices), and also performs Weights & Measures approved custody transfer actions. Some electronic flow meters can comprise a display screen used for data output and user input.

In one implementation, the flow meter may comprise, or be comprised in, a system for data capture and data management. As an example, such as system may be able to capture transaction data at the fueling point, and send the data to a back end portion (e.g., such as in an office or other third party), to prepare the data for further use, such as inventory, invoicing, etc. As an example, fueling data can be automatically captured, and the data can be transferred to a back end system for processing. As an example, upon fueling completion, a user/operator may print out a ticket that comprises information indicative of the fueling operation. Further, in this example, the fueling data may be transferred (e.g., wired or wirelessly) to a data management system, such as in the back end of a fueling management system.

In one implementation, the flow meter may comprise programming, such as an application, that converts the liquid transfer data (e.g., fueling data) into a scannable code, such as a bar code of quick response (QR) code, or some other type of scannable data matrix or image matrix code. In this implementation, the scannable code can be displayed on a display screen that is viewable and/or scannable, such as by a user. As an example, the scannable code may comprise data indicative of information associated with the liquid transfer, such as amount of liquid transferred, type of liquid, time of and for transfer, date, location, user/operator ID, transfer target (e.g., aircraft), storage vessel (e.g., tanker truck or stationary tank), flow rate, errors, environmental conditions, and other information that is used for liquid transfer management.

In one implementation, the flow meter may be able to store and provide historical liquid transfer data, such as for transfer operations that have already taken place. For example, such data may comprise shift data (e.g., transfer during a specified time period), various types of fuel transfer, historical error data, and transfer operational data. In this implementation, selected historical liquid transfer data may be converted into a scannable code, and displayed on the display screen.

In one implementation, the data comprised in the scannable code may be encrypted. As an example, an algorithm, such as the Encrypted key - Encrypted QR (EK-EQR) algorithm, may be used. In this example, a user/operator may use an appropriate encryption key to access the data in the code.

In one implementation, a user/operator may use a portable device (e.g., handheld smart device with a scanner) to scan the displayed code. As an example, the portable device may comprise a code scanner or image capture component that scan or capture the code, and store it locally on the device. As one example, the stored code indicative of the fueling data may take the place of a printable ticket. In this implementation, for example, the ability to scan or capture the code displayed on the display screen may be performed without a wireless or wired connection, such as to a network (e.g., PAN, WAN, Internet, or wireless connection), between the meter and the device, or the device and another network. This may provide for additional security, such as from a third party intercepting the data via the network connection, for example.

In one implementation, the stored scannable code, or data associated with the code, can be to a liquid transfer management system, such as a back end system in an office or server, by a variety of means. For example, the code or the data can be sent to the management system by a short message service (SMS) or email, or by some other wireless transfer means. As another example, the portable device may be communicatively coupled (e.g., physically connected via wire) with a component that can download the code or data to the management system. In this way, for example, the data indicative of the liquid transfer operation may be collected in a more secure manner, which mitigates access by unwanted third parties. Further, transfer of the data may not be subjected to inoperable wireless network situations, such as outages or interruptions.

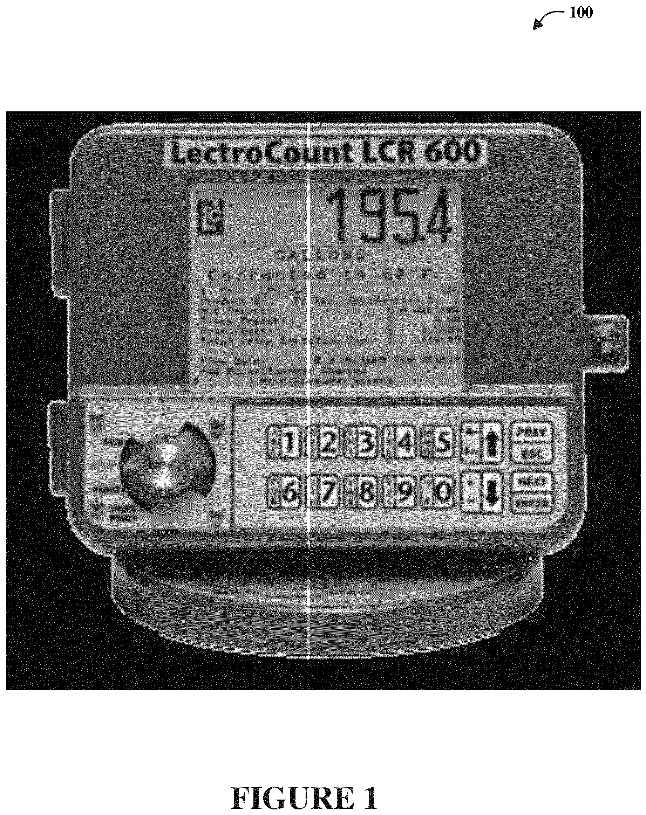

FIGURE 1 is an illustration of an example implementation of a liquid transfer register apparatus 100. In one implementation, the example meter 100 may be coupled with a flow meter that is used to measure fluid flow during a transfer operation. In this example, the flow register can collect the liquid flow information provided by the flow meter, along with other desired liquid transfer information.

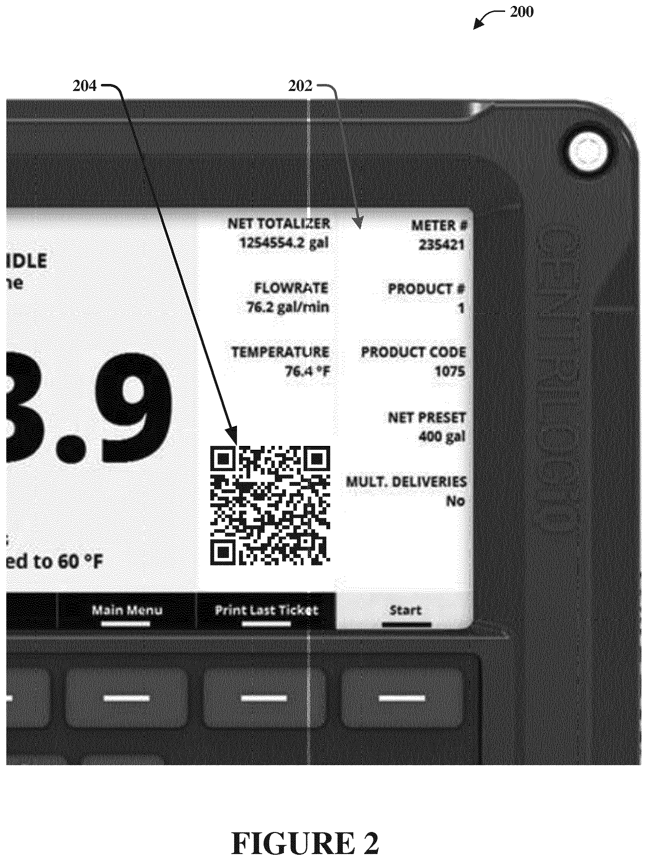

FIGURE 2 is a component diagram illustrating one implementation of one or more portions of one or more systems described herein. In this example implementation, a flow register component 200 comprises a display 202 that may be used to display operational information related to liquid transfer. Further, in this implementation, a scannable code 204 (e.g., QR code) can be displayed on the display screen 202, and comprise scannable data indicative of information related to the liquid transfer operation.

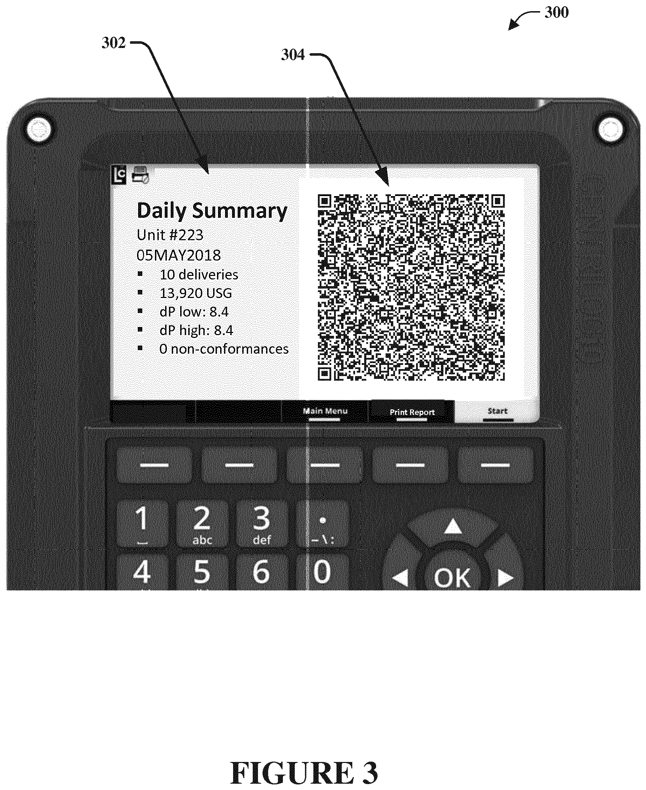

FIGURE 3 is a component diagram illustrating one implementation of one or more portions of one or more systems described herein. In this example implementation, a flow register component 300 comprises a display 302 that displays operational information related to liquid transfer, such as historical transfer data. Further, in this implementation, a scannable code 304 is displayed on the display screen 302 that comprise scannable data indicative of historical liquid transfer information related to the liquid transfer operations.

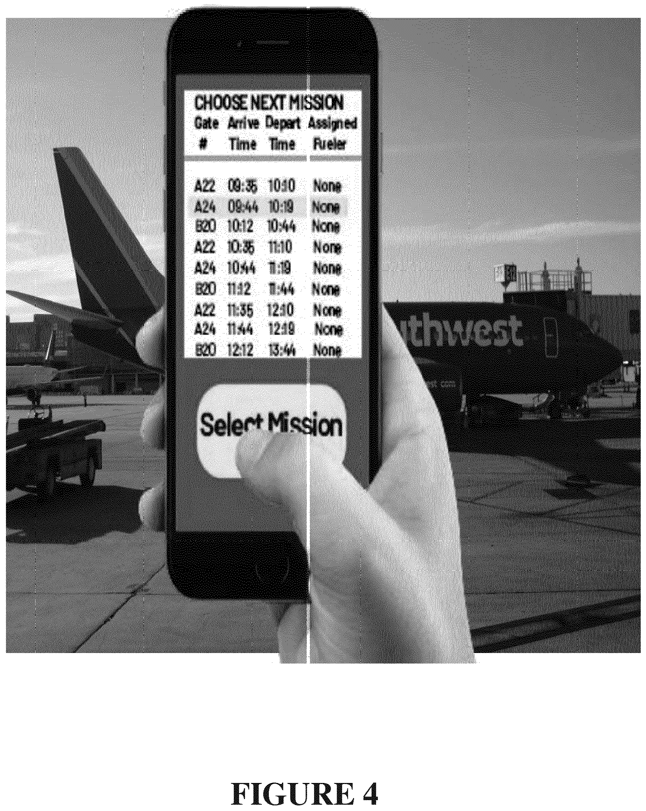

FIGURES 4 - 9 illustrate an example implementation of a method for improving fueling operations, utilizing one or more systems described herein. In FIGURE 4, for example, a fueling operator (e.g., fueler) may be assigned one or more fueling missions, which can be provided to the fueler on a handheld device, using an application disposed on the device. In this example, the fueler can select and accept a desired fueling mission. As an illustrative example, a list of unassigned flights can be listed on the device, based on priority relative to arrival/departure time. The fueler can select and accept the next fueling mission, and proceed to the fueling location.

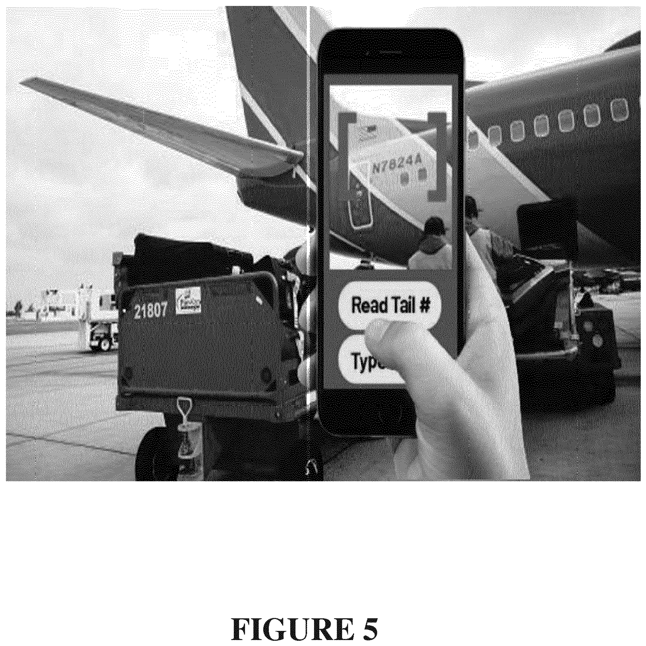

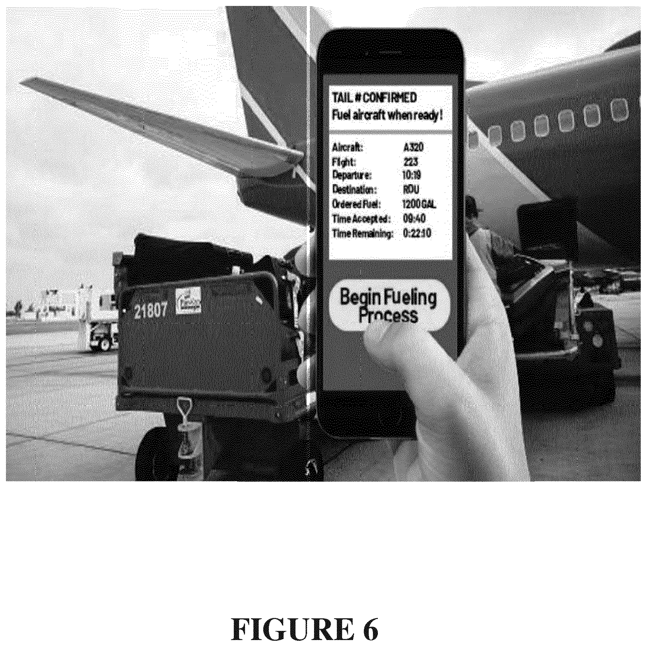

In FIGURE 5, for example, the fueler may arrive at the fueling location, and confirm the fueling target, such as the target plane. In one implementation, the fueler may be able to confirm the fueling target using optical recognition, such as by scanning or capturing a target ID (e.g., aircraft tail number), or by manual input to the device. As illustrated in FIGURE 6, the application on the device may confirm that the appropriate fueling equipment is present at the fueling location, and can record the time that the operator/fueler arrives at the fueling location. The fueler may initiate fueling operation, following proper procedures to fuel the aircraft, and complete the fueling process.

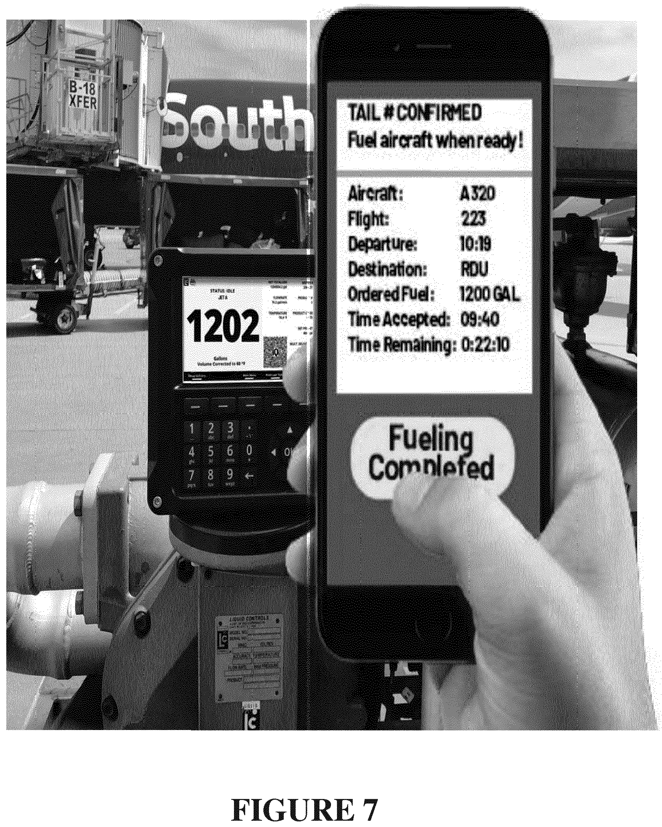

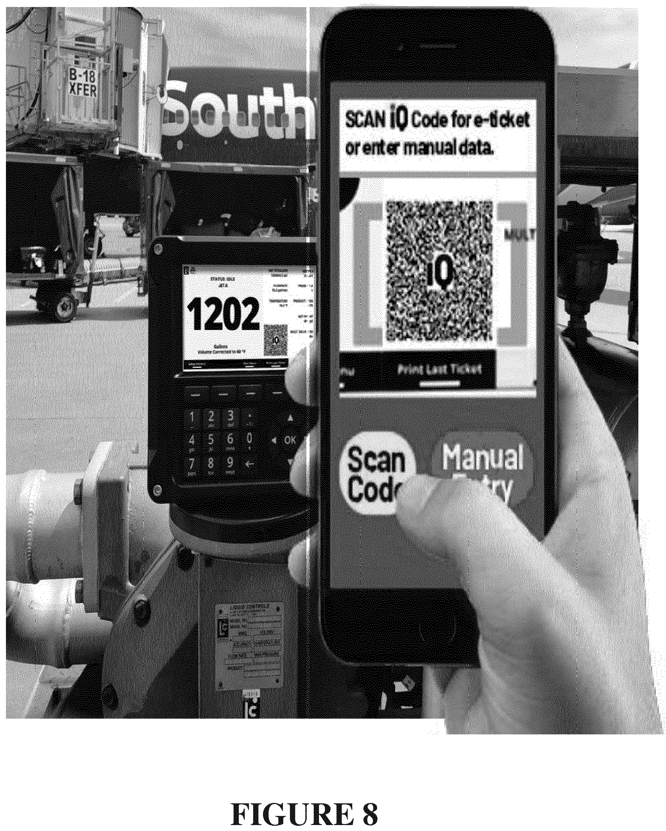

As illustrated in FIGURE 7, when the fueling operation has completed, the fueler may activate a "fueling complete" process on the application, such as using a button on the display. As illustrated in FIGURE 8, upon completion of fueling, the flow register component coupled with the flow meter can generate a scannable code indicative of data associated with the now completed fueling operation. Further, in this example, the fueler may use the application on the handheld device to capture the scannable code, such as by scanning or image capture.

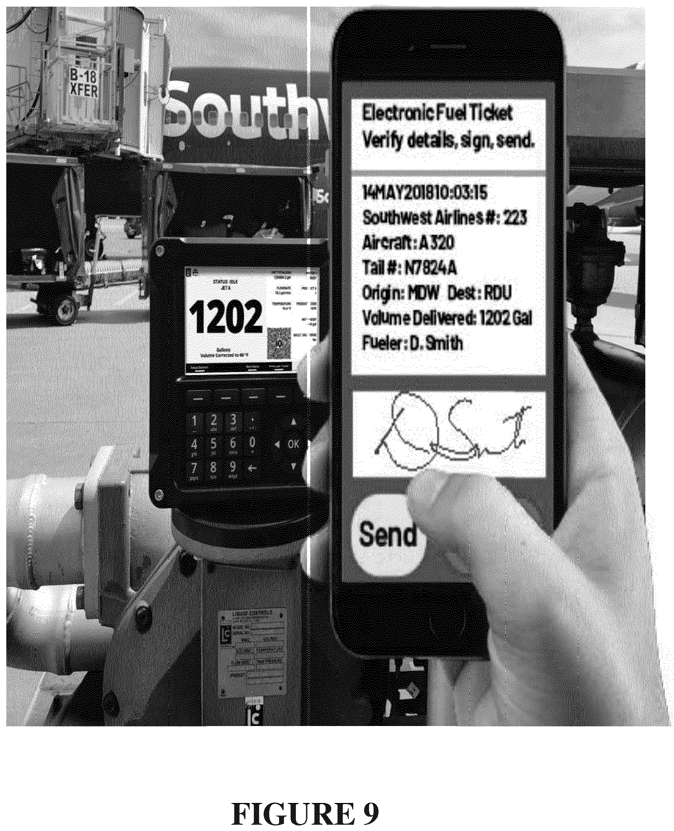

As illustrated in FIGURE 9, in this example, the application on the handheld device can provide for a confirmation of the completion of the operation, including the scanning of the code. Upon confirmation by the fueler, such as by identification, signature or some other identification code, the scanned code or the data associated with the scanned code can be sent to the backend fueling management system, such as by SMS, email or some other method. Further, as an example, the fueler may select the next fueling mission, and complete the same steps. In this way, for example, fueling data for the fueler can be easily collected, and managed, such as without tickets, and with improved security.

In summary, one or more techniques and/or systems are disclosed for providing for improved fluid transfer information collection and management. Such a system may utilize scannable codes to collect fluid transfer information, mitigating the use of printable tickets, manual collection, or wireless connection and transmission to remote external devices while improving security. As an example, a fluid flow meter can be coupled with a register that collects flow information from the meter and other collected information associated with fluid transfer. Upon completion of a fluid transfer event, such as aircraft refueling, LPG fueling, or other refined fuels or valuable liquids, data associated with the transfer event, such as amount, type, conditions, operator, time, etc., can be converted into an encryptable, scannable code, such as a QR code. The scannable code can be displayed on a display screen, and captured by a portable device, and stored. The captured data or code may later be transferred to a third party or back end data management system for further analysis or processing.

Moreover, the word "exemplary" is used herein to mean serving as an example, instance or illustration. Any aspect or design described herein as "exemplary" is not necessarily to be construed as advantageous over other aspects or designs. Rather, use of the word exemplary is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Further, At least one of A and B and/or the like generally means A or B or both A and B. In addition, the articles "a" and "an" as used in this application and the appended claims may generally be construed to mean "one or more" unless specified otherwise or clear from context to be directed to a singular form.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

Also, although the disclosure has been shown and described with respect to one or more implementations, equivalent alterations and modifications will occur to others skilled in the art based upon a reading and understanding of this specification and the annexed drawings. The disclosure includes all such modifications and alterations and is limited only by the scope of the following claims. In particular regard to the various functions performed by the above described components (e.g., elements, resources, etc.), the terms used to describe such components are intended to correspond, unless otherwise indicated, to any component which performs the specified function of the described component (e.g., that is functionally equivalent), even though not structurally equivalent to the disclosed structure which performs the function in the herein illustrated exemplary implementations of the disclosure. In addition, while a particular feature of the disclosure may have been disclosed with respect to only one of several implementations, such feature may be combined with one or more other features of the other implementations as may be desired and advantageous for any given or particular application. Furthermore, to the extent that the terms "includes," "having," "has," "with," or variants thereof are used in either the detailed description or the claims, such terms are intended to be inclusive in a manner similar to the term "comprising."

The implementations have been described, hereinabove. It will be apparent to those skilled in the art that the above methods and apparatuses may incorporate changes and modifications without departing from the general scope of this invention. It is intended to include all such modifications and alterations in so far as they come within the scope of the appended claims.

The invention or embodiments or sub features thereof may be provided in software or logic or as a computer program product and the invention extends to methods and logic for providing all apparatus aspects and sub features. In particular, without limitation features of dependent system claims below may be provided as features of method or logic or computer program product claims.

## Claims

1. A system for measuring, collecting and transferring fuel transfer system data, comprising:
a fluid flow register (200) receiving fluid flow information from a certified fluid flow meter for a fuel transfer event, the fluid flow information indicative of an amount of fuel transferred during the fuel transfer event, collecting data associated with the fuel transfer event, the collected data comprising a fuel transfer event identification, ID, a duration of time for the fuel transfer event, and a type of fuel transferred during the fuel transfer event, and aggregating custody transfer data of fuel over a select period of time;
a scannable code generator that generates a scannable code (204) comprising data including the fluid flow information from the certified fluid flow meter and the collected data from the fluid flow register;
a display screen (202) that displays the scannable code (204),
a wireless communication protocol that transfers the scannable code (204) to be stored, scanned, interpreted, read, and/or displayed by remote devices; and
a portable scanning device that scans the scannable code (204) displayed on the display screen (202), and the portable scanning device transferring the scannable code (204) to a remote system using the wireless communication protocol to a third party and/or to a back end fluid transfer data management system.

2. The system of claim 1, the scannable code generator generates a scannable code (204) comprising data indicative of the aggregated custody transfer data and the collected data.

3. The system of any preceding claim, the scannable code generator generates a scannable code (204) comprising of metrologically relevant data for valuable fluid custody transfer.

4. The system of any preceding claim, the scannable code generator comprising an encrypted scannable code generator that generates an encrypted scannable code (204) comprising fueling system data indicative of the fluid flow information and the collected data.

5. The system of any preceding claim, comprising a printer that prints the scannable code (204) on printable media.

6. The system of claim 5, the portable scanning device scanning the scannable code (204) displayed on the printed media.

7. The system of any preceding claim, the portable scanning device locally storing the data indicative of the fluid flow information and the collected data.

8. The system of any preceding claim, the portable scanning device transferring the scannable code (204) to a third party and/or to a back end fluid transfer data management system.

9. The system of any preceding claim, the data indicative of the fluid flow information and the collected data comprising one or more of: customer identification, sale number, quantity, product type, conditions, operator, time, price, product characteristics, fuel quality, density, additives, inventory levels, and system pressures.

10. The system of any preceding claim, the scannable code generator converts the data indicative of the fluid flow information and the collected data into the scannable code (204).

11. The system of any preceding claim, the scannable code (204) comprising one of: a barcode, or a two-dimensional barcode.

12. A fluid flow meter for use in the system of any preceding claim comprising:
a fluid flow register (200) receiving fluid flow information from a certified fluid flow meter for a fuel transfer event, the fluid flow information indicative of an amount of fuel transferred during the fuel transfer event, and collecting data associated with the fuel transfer event, the collected data comprising a fuel transfer event identification, ID, a duration of time for the fuel transfer event, and a type of fuel transferred during the fuel transfer event;
a scannable code generator that generates a scannable code (204) comprising data including the fluid flow information and the collected data;
a display screen (202) that displays the scannable code (204).

13. A method of measuring, collecting and transferring fuel transfer system data, comprising:
obtaining fluid flow information from a certified fluid flow meter for a fuel transfer event, the fluid flow information indicative of an amount of fuel transferred during the fuel transfer event;
collecting data associated with the fuel transfer event, the collected data comprising a fuel transfer event identification, ID, a duration of time for the fuel transfer event, and a type of fuel transferred during the fuel transfer event;
aggregating custody transfer data of fuel over a select period of time;
generating a scannable code (204) comprising data including the fluid flow information from the certified fluid flow meter and the collected data from the fluid flow register;
displaying the scannable code (204);
scanning the scannable code (204) via a portable scanner; and
transferring data via a wireless communication protocol to a fluid transfer data management system.

14. A computer program or computer program product having stored thereon the computer program, the computer program comprising instructions to cause the device of claim 1 to execute the steps of the method of claim 13.

## Patentansprüche

1. System zum Messen, Sammeln und Transferieren von Daten eines Kraftstofftransfersystems, das Folgendes umfasst:
ein Fluiddurchflussregister (200), das Fluiddurchflussinformationen von einem zertifizierten Fluiddurchflussmesser für ein Kraftstofftransferereignis empfängt, wobei die Fluiddurchflussinformationen eine während des Kraftstofftransfervorgangs übertragene Kraftstoffmenge angibt, wobei das Sammeln von Daten mit dem Kraftstofftransferereignis verbunden ist, wobei die gesammelten Daten eine Identifikation des Kraftstofftransferereignisses, eine ID, eine Zeitdauer für das Kraftstofftransferereignis und eine Art von Kraftstoff, der während des Kraftstofftransferereignisses transferiert wurde, umfassen, und die eichamtlichen Kraftstofftransferdaten über eine ausgewählte Zeitspanne aggregieren;
einen Generator für abtastbaren Code, der einen abtastbaren Code (204) erzeugt, der Daten enthält, die die Fluiddurchflussinformationen von dem zertifizierten Fluiddurchflussmesser und die gesammelten Daten von dem Fluiddurchflussregister umfassen;
einen Anzeigebildschirm (202), der den abtastbaren Code (204) anzeigt,
ein drahtloses Kommunikationsprotokoll, das den abtastbaren Code (204) zum Speichern, Abtasten, Interpretieren, Lesen und/oder Anzeigen durch entfernte Vorrichtungen überträgt; und
eine tragbare Abtastvorrichtung, die den abtastbaren Code (204) abtastet, der auf dem Anzeigebildschirm (202) angezeigt wird, und wobei die tragbare Abtastvorrichtung den abtastbaren Code (204) an ein entferntes System unter Verwendung des drahtlosen Kommunikationsprotokolls an eine dritte Partei und/oder an ein Back-End-Fluidtransferdatenmanagementsystem überträgt.

2. System nach Anspruch 1, wobei der Generator für abtastbaren Code einen abtastbaren Code (204) erzeugt, der Daten umfasst, die die aggregierten eichamtlichen Transferdaten und die gesammelten Daten anzeigen.

3. System nach einem der vorhergehenden Ansprüche, wobei der Generator für abtastbaren Code einen abtastbaren Code (204) erzeugt, der messtechnisch relevante Daten für den eichamtlichen Transfer wertvoller Flüssigkeiten enthält.

4. System nach einem der vorhergehenden Ansprüche, wobei der Generator für abtastbaren Code einen Generator für verschlüsselte abtastbare Codes umfasst, der einen verschlüsselten abtastbaren Code (204) erzeugt, der Daten des Betankungssystems umfasst, die auf die Fluiddurchflussinformationen und die gesammelten Daten hinweisen.

5. System nach einem der vorhergehenden Ansprüche, das einen Drucker umfasst, der den abtastbaren Code (204) auf ein bedruckbares Medium druckt.

6. System nach Anspruch 5, wobei die tragbare Abtastvorrichtung den abtastbaren Code (204) abtastet, der auf dem bedruckten Medium angezeigt wird.

7. System nach einem der vorhergehenden Ansprüche, wobei die tragbare Abtastvorrichtung die Daten, die die Fluiddurchflussinformationen und die gesammelten Daten anzeigen, lokal speichert.

8. System nach einem der vorhergehenden Ansprüche, wobei die tragbare Abtastvorrichtung den abtastbaren Code (204) an eine dritte Partei und/oder an ein Back-End-Fluidtransfer-Datenmanagementsystem überträgt.

9. System nach einem der vorhergehenden Ansprüche, wobei die Daten, die die Fluiddurchflussinformationen und die gesammelten Daten anzeigen, eines oder mehrere der Folgenden umfassen: Kundenidentifikation, Verkaufsnummer, Menge, Produkttyp, Bedingungen, Bediener, Zeit, Preis, Produkteigenschaften, Kraftstoffqualität, Dichte, Additive, Lagerbestände und Systemdrücke.

10. System nach einem der vorhergehenden Ansprüche, wobei der Generator für abtastbaren Code die Daten, die die Flüssigkeitsdurchflussinformationen und die gesammelten Daten anzeigen, in den abtastbaren Code (204) umwandelt.

11. System nach einem der vorhergehenden Ansprüche, wobei der abtastbare Code (204) eines der Folgenden umfasst: einen Strichcode oder einen zweidimensionalen Strichcode.

12. Fluiddurchflussmesser zur Verwendung in dem System nach einem der vorhergehenden Ansprüche, der Folgendes umfasst:
ein Fluiddurchflussregister (200), das Fluiddurchflussinformationen von einem zertifizierten Fluiddurchflussmesser für ein Kraftstofftransferereignis empfängt, wobei die Fluiddurchflussinformationen eine während des Kraftstofftransfervorgangs übertragene Kraftstoffmenge angibt, und wobei das Sammeln von Daten mit dem Kraftstofftransferereignis verbunden ist, wobei die gesammelten Daten eine Identifikation des Kraftstofftransferereignisses, ID, eine Zeitdauer für das Kraftstofftransferereignis und eine Art von Kraftstoff, der während des Kraftstofftransferereignisses transferiert wurde, umfassen;
einen Generator für abtastbaren Code, der einen abtastbaren Code (204) erzeugt, der Daten enthält, die die Fluiddurchflussinformationen und die gesammelten Daten enthalten
einen Anzeigebildschirm (202), der den abtastbaren Code (204) anzeigt.

13. Verfahren zum Messen, Sammeln und Transferieren von Daten eines Kraftstofftransfersystems, das Folgendes umfasst:
Erhalten von Fluiddurchflussinformationen von einem zertifizierten Fluiddurchflussmesser für ein Kraftstofftransferereignis, wobei die Fluiddurchflussinformationen eine während des Kraftstofftransferereignisses transferierte Kraftstoffmenge anzeigen;
Sammeln von Daten, die mit dem Kraftstofftransferereignis verbunden sind, wobei die gesammelten Daten eine Identifikation des Kraftstofftransferereignisses, ID, eine Zeitdauer für das Kraftstofftransferereignis und eine Art von Kraftstoff, der während des Kraftstofftransferereignisses transferiert wurde, umfassen;
Aggregieren von eichamtlichen Kraftstofftransferdaten über eine ausgewählte Zeitspanne;
Erzeugen eines abtastbaren Codes (204), der Daten enthält, die die Fluiddurchflussinformationen von dem zertifizierten Fluiddurchflussmesser und die gesammelten Daten von dem Fluiddurchflussregister umfassen;
Anzeigen des abtastbaren Codes (204);
Abtasten des abtastbaren Codes (204) mit einem tragbaren Scanner; und
Übertragen von Daten über ein drahtloses Kommunikationsprotokoll an ein Fluidtransfer-Datenmanagementsystem.

14. Computerprogramm oder Computerprogrammprodukt, auf dem das Computerprogramm gespeichert ist, wobei das Computerprogramm Anweisungen enthält, um die Vorrichtung nach Anspruch 1 zu veranlassen, die Schritte des Verfahrens nach Anspruch 13 auszuführen.

## Revendications

1. Système destiné à mesurer, collecter et transférer des données de système de transfert de carburant, comprenant :
un registre de débit de fluide (200) recevant des informations de débit de fluide à partir d'un débitmètre de fluide certifié pour un événement de transfert de carburant, les informations de débit de fluide indiquant une quantité de fluide transférée durant l'événement de transfert de carburant, collectant des données associées à l'événement de transfert de carburant, les données collectées comprenant une identification, ID, d'événement de transfert de carburant, une durée temporelle pour l'événement de transfert de carburant, et un type de carburant transféré durant l'événement de transfert de carburant, et agrégeant les données de transfert transactionnel de carburant sur une période de temps sélectionnée ;
un générateur de codes scannables qui génère un code scannable (204) comprenant des données incluant les informations de débit de fluide provenant du débitmètre de fluide certifié et les données collectées provenant du registre de débit de fluide ;
un écran d'affichage (202) qui affiche le code scannable (204),
un protocole de communication sans fil qui transfère le code scannable (204) devant être stocké, scanné, interprété, lu, et/ou affiché par des dispositifs distants ; et
un dispositif de scannage portable qui balaie le code scannable (204) affiché sur l'écran d'affichage (202), et le dispositif de scannage portable transférant le code scannable (204) à un système distant grâce à l'utilisation du protocole de communication sans fil à un tiers et/ou à un système de gestion de données de transfert de fluide dorsal.

2. Système de la revendication 1, le générateur de codes scannables générant un code scannable (204) comprenant des données indiquant les données de transfert transactionnel agrégées et les données collectées.

3. Système de n'importe quelle revendication précédente, le générateur de codes scannables générant un code scannable (204) comprenant des données pertinentes sur le plan métrologique pour un transfert transactionnel de fluide à valeur importante.

4. Système de n'importe quelle revendication précédente, le générateur de codes scannables comprenant un générateur de codes scannables cryptés qui génère un code scannable crypté (204) comprenant des données de système d'approvisionnement en carburant indiquant les informations de débit de fluide et les données collectées.

5. Système de n'importe quelle revendication précédente, comprenant une imprimante qui imprime le code scannable (204) sur un support imprimable.

6. Système de la revendication 5, le dispositif de scannage portable balayant le code scannable (204) affiché sur le support imprimé.

7. Système de n'importe quelle revendication précédente, le dispositif de scannage portable stockant localement les données indiquant les informations de débit de fluide et les données collectées.

8. Système de n'importe quelle revendication précédente, le dispositif de scannage portable transférant le code scannable (204) à un tiers et/ou à un système de gestion de données de transfert de fluide dorsal.

9. Système de n'importe quelle revendication précédente, les données indiquant les informations de débit de fluide et les données collectées comprenant un ou plusieurs éléments parmi : identification du client, numéro de vente, quantité, type de produit, conditions, opérateur, temps, prix, caractéristiques du produit, qualité de carburant, densité, additifs, niveaux d'inventaire, et pressions du système.

10. Système de n'importe quelle revendication précédente, le générateur de codes scannables convertissant les données indiquant les informations de débit de fluide et les données collectées dans le code scannable (204).

11. Système de n'importe quelle revendication précédente, le code scannable (204) comprenant un élément parmi : un code-barres, ou un code-barres bidimensionnel.

12. Débitmètre de fluide destiné à être utilisé dans le système de n'importe quelle revendication précédente comprenant :
un registre de débit de fluide (200) recevant des informations de débit de fluide à partir d'un débitmètre de fluide certifié pour un événement de transfert de carburant, les informations de débit de fluide indiquant une quantité de fluide transférée durant l'événement de transfert de carburant, et collectant des données associées à l'événement de transfert de carburant, les données collectées comprenant une identification, ID, d'événement de transfert de carburant, une durée temporelle pour l'événement de transfert de carburant, et un type de carburant transféré durant l'événement de transfert de carburant ;
un générateur de codes scannables qui génère un code scannable (204) comprenant des données incluant les informations de débit de fluide et les données collectées ;
un écran d'affichage (202) qui affiche le code scannable (204).

13. Procédé de mesure, collecte et transfert de données de système de transfert de carburant, comprenant :
l'obtention d'informations de débit de fluide à partir d'un débitmètre de fluide certifié pour un événement de transfert de carburant, les informations de débit de fluide indiquant une quantité de carburant transférée durant l'événement de transfert de carburant ;
la collecte de données associées à l'événement de transfert de carburant, les données collectée comprenant une identification, ID, d'événement de transfert de carburant, une durée temporelle pour l'événement de transfert de carburant, et un type de carburant transféré durant l'événement de transfert de carburant ;
l'agrégation de données de transfert transactionnel de carburant sur une période de temps sélectionnée ;
la génération d'un code scannable (204) comprenant des données incluant les informations de débit de fluide provenant du débitmètre de fluide certifié et les données collectées provenant du registre de débit de fluide ;
l'affichage du code scannable (204) ;
le balayage du code scannable (204) par l'intermédiaire d'un scanner portable ; et
le transfert de données par l'intermédiaire d'un protocole de communication sans fil à un système de gestion de données de transfert de fluide.

14. Programme informatique ou produit à programme informatique sur lequel est stocké le programme informatique, le programme informatique comprenant des instructions qui amènent le dispositif de la revendication 1 à exécuter les étapes du procédé de la revendication 13.
